# EUROPÄISCHE PATENTANMELDUNG

(11) **EP 1 634 522 A1**
(43) Veröffentlichungstag der Anmeldung: **15.03.2006**
(21) Anmeldenummer: 05405520.7
(22) Anmeldetag: 05.09.2005
(51) Int. Cl.: A47J 39/00, A47J 47/14

(54) **Verfahren zum Verteilen heisser Speisen, insbesondere von Pizzas, und Vorrichtung zum Ausüben des Verfahrens**

(30) Priorität: 09.09.2004 CH 148904
(71) Anmelder: Delzanno, Lorenzo, 6710 Biasca (CH); Delzanno, Roberto, 6900 Paradiso (CH); Gaggini, Carlo, 6982 Agno (CH)
(72) Erfinder: Delzanno, Lorenzo, 6710 Biasca (CH); Delzanno, Roberto, 6900 Paradiso (CH); Gaggini, Carlo, 6982 Agno (CH)
(74) Vertreter: Gaggini, Carlo

(57) **Zusammenfassung**

Die vorliegende Erfindung betrifft ein Verfahren zum Verteilen heisser Speisen, insbesondere von Pizzas, das die folgenden Verfahrensschritte umfasst:
- Vorbereiten und Zubereiten (Backen) der Speisen,
- Unterteilen der Speisen in einzelne Portionen,
- Unterbringen einer oder mehrerer Speisen-Portionen in einem transportablen wiederverwendbaren Behälter (5),
- Unterbringen einer Mehrzahl von Behältern (5) in einem beheizten und klimatisierten Aufbewahrungsschrank (6),
- Zum Zeitpunkt der Verteilung Unterbringen eines oder mehrerer Behälter (5) in einem auf einem Motorfahrzeug (8) montierten Transportofen (7), von der in der EP-1293154 beschriebenen Art,
- Auslieferung der Speisen an den Kunden nach Entnahme aus dem Behälter (5).

Das erfindungsgemässe Verfahren, zusammen mit der entsprechenden Vorrichtung, erlaubt die Rationalisierung der Verteilungsarbeit heisser Speisen an Private und Institutionen, wobei die Qualität des abgelieferten Produktes bestens erhalten bleibt.

## Beschreibung

Die vorliegende Erfindung betrifft ein Verfahren zum Verteilen heisser Speisen, insbesondere von Pizzas, gemäss dem Oberbegriff des Patentanspruchs 1, und eine Vorrichtung zum Ausüben des erfindungsgemässen Verfahrens gemäss dem Oberbegriff des Anspruchs 6.

Die Hausiieferung heisser, essbereiter Speisen hat sich im allgemeinen Gebrauch zunehmend durchgesetzt, sei es wegen der neuen Ernährungsgewohnheiten der Bevölkerung, der oft die Zeit fehlt, sich in der Küche zu beschäftigen, oder sei es wegen der steten Zunahme alter Personen, die bis in höchstes Alter in der eigenen Wohnung leben wollen, wenn sie die Möglichkeit haben, heisse Speisen nach Hause geliefert zu bekommen. Daher sind Verteilnetze für heisse Speisen entstanden, besonders in grossen Agglomerationen, wo die Logistik-Probleme rationeller zu lösen sind. So ist beispielsweise der Spitex-Dienst zu einem bekannten Symbol dafür geworden.

Das Problem der Verteilung heisser Speisen ist jedoch gar nicht leicht zu lösen, da man den Aspekten der Hygiene, der Qualität der Speisen im Moment der Ablieferung, der Transportzeit, usw., Rechnung tragen muss.

Heutzutage stehen verschieden Transportsysteme im Gebrauch, die meist mit einfachen isolierten Behältern arbeiten, in denen die in einer Zentralküche zubereiteten und in Portionen aufgeteilten Speisen - klassisch ist der Fall der Pizza, die in der Regel als solche eine Portion darstellt - während des Transportes und der Lieferung an den Kunden aufbewahrt werden. Seit einigen Jahren hat das Transportsystem Verbesserungen erfahren, dank der Einführung von auch während des Transportes autonom beheizten Transportöfen, die solchermassen ausgelegt sind, dass dank perfekter Klimatisierung mit Luftaustausch die organoleptischen (geschmacklichen) Eigenschaften des Produkts unverändert erhalten bleiben. Ein Beispiel dafür ist die Vorrichtung zum Warmhalten und Transportieren von Speisen mittels eines Fahrzeugs, wie in der EP-1293154 beschrieben. Die Verwendung dieses neuartigen Transportofens hat die Bedingungen für die Verteilung heisser Speisen bereits stark verbessert, konnte aber das Problem noch nicht in vollständig zufriedenstellender Weise lösen. Was fehlt ist nämlich eine durchgehende Verteilungs-Strategie, die alle Schritte vom Moment der Zubereitung in der Küche bis zur Übergabe an den Kunden umfasst. Es genügt nämlich noch nicht, dass ein optimaler Transportofen zur Verfügung steht, der auf einem Auto oder einem Motorrad montiert ist, wie der im oben genannten Patent beschriebene, der inzwischen alle seine hervorragenden Eigenschaften im praktischen Gebrauch bewiesen hat. Der Transport ist jedoch nur eine Phase im ganzen Verteilvorgang, der zahlreiche andere Aspekte umfasst, wie das Aufbewahren zwischen der Fertigstellung und dem Einbringen in den Transportofen, die Art und Weise der Ablieferung, die Rationalisierung der Produktion und der Aufbewahrung, also der ganzen Reihe von Schritten, nach welcher die Speisen produziert und an die verschiedenen Kunden verteilt werden, usw. Bezüglich beispielsweise der Pizzas entstehen nicht unerhebliche Probleme wegen der Verwendung von Kartonschachteln, wie dies heute üblich ist, was aber wesentliche ökologische und ökonomische Probleme mit sich bringt.

Der Zweck der vorliegenden Erfindung ist, eine vollständige Lösung für das Verteilsystem für heisse Speisen vorzuschlagen, das Rationalisierung des Verteilvorgangs gestattet und beste Bedingungen zur Aufbewahrung des Produkts sicherstellt, von der Fertigstellung in der Küche bis zum Esstisch des Konsumenten, und die unabhängig von der Distanz des Ortes des Verzehrs vom Ort der Zubereitung, über eine Zeitspanne von Minuten bis allenfalls Stunden, entsprechend der Ausdehnung der grössten Bevölkerungsanballungen. Dies soll einerseits der Qualität des auszuliefernden Produkts Rechnung tragen, das sich bei der Ablieferung hygienisch und kulinarisch einwandfrei präsentieren muss, und anderseits soll dies die ökologischen Prinzipien einhalten, die Schonung der verfügbaren Energiereserven fordern.

Dieser Zweck wird erfüllt mit Hilfe eines Verfahrens zum Verteilen heisser Speisen mit den Eigenschaften gemäss dem kennzeichnenden Teil des Anspruchs 1 sowie mittels einer Vorrichtung, welche die Eigenschaften gemäss dem kennzeichnenden Teil des Anspruchs 6 aufweist.

Die vorliegende Erfindung zeigt im Wesentlichen die Art und Weise, wie die heute schon verfügbaren Elemente in der praktischen täglichen Anwendung rationell verwendet werden können, wie beispielsweise die Ablagekästen zur vorübergehenden Aufbewahrung der Speisen, die wiederverwendbaren transportablen Behälter und die auf Motorfahrzeugen montierten Transportöfen, deren Verwendung jedoch nach herkömmlicher Praxis ohne Systematik erfolgte, welche die volle Ausnützung ihres ganzen Potenzials erlaubte. Dank der vorliegenden Erfindung werden die einzelnen Schritte des Verfahrens so kombiniert, dass sie eine rationelle Kette bilden, welche allen Erfordernissen der Verteilung der Speisen genügt, wobei den ökonomischen und ökologischen Forderungen gebührend Rechnung getragen wird.

Zu diesem Zweck werden auch gemäss einigen vom Hauptanspruch abhängigen Ansprüchen die heute von der Informatik angebotenen Möglichkeiten ausgenützt, welche beispielsweise die Optimierung der Verteilwege in Funktion der eingegangenen Bestellungen erlauben, wobei alles auf den Zweck ausgerichtet ist, die Verteilungsaufgabe rationell und systematisch zu gestalten, unter Ausnützung aller von der heutigen Technik angebotenen Möglichkeiten.

Die vorliegende Erfindung wird im Folgenden unter Bezugnahme auf einige Ausführungsbeispiele näher beschrieben, die in den beigefügten Abbildungen illustriert sind. Die Abbildungen zeigen in der:
- Fig. 1: Ein Schema des vollständigen Ablaufs der Verfahrensschritte des erfindungsgemässen Verfahrens zum Verteilen, mit allen in Betracht kommenden Elementen in bloss schematischer Darstellung;
- Fig. 2a, 2b und 2c: Ein Element des Zyklus, genauer gesagt der Kasten für die vorübergehende Aufbewahrung der Speisen, der im Rahmen der vorliegenden Erfindung eine sehr wichtige Rolle spielt.

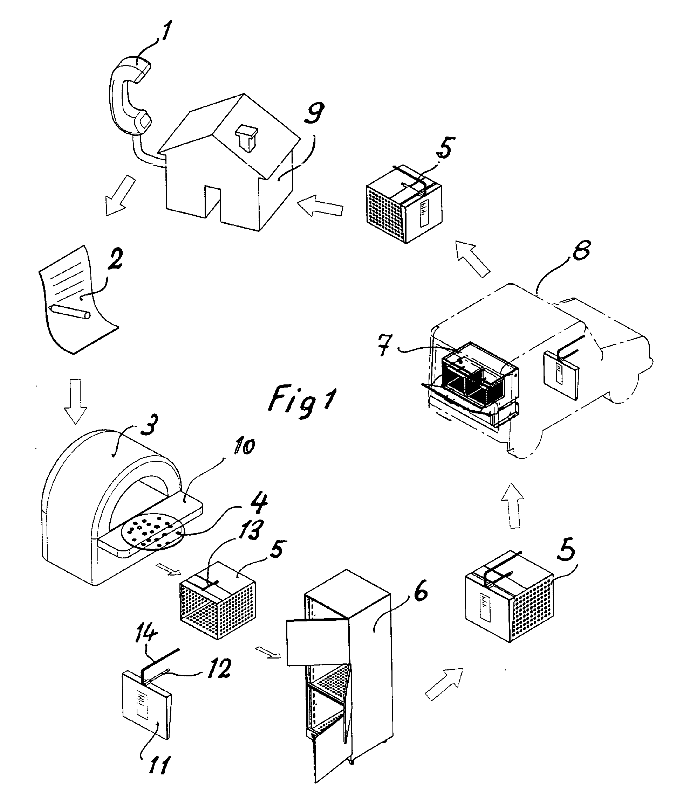

In der Fig. 1 sind alle Schritte des Verfahrens zum Verteilen gemäss der vorliegenden Erfindung dargestellt.

Die Kette der Verfahrensschritte beginnt mit der Bestellung des Produktes über das schematisch angedeutete Telefon i, weiche vom Produzenten auf dem Formular 2 festgehalten wird (das natürlich auch in computerisierter Form mit allen Daten - Zustelladresse, Ablieferungszeit, gewünschtes Produkt, usw., - aufgenommen werden kann, die zum Ausführen der Bestellung erforderlich sind).

Die Bestellung gelangt sodann in die Küche, in der Fig. 1 mit dem Backofen 3 schematisch dargestellt, wo die Speisen zubereitet werden.

Hier sei bereits festgehalten, dass in der Fig. 1 zur Darstellung Elemente ausgewählt sind, die sich besonders für die Zubereitung und den Transport flacher Speisen, wie beispielsweise Pizzas, eignen, wobei jedoch mit passenden Änderungen das System leicht auch für den Transport andersartiger Speisen angepasst werden kann, wie in Metallbehältern untergebrachte vollständige Mahlzeiten oder Ähnliches. Dabei ist jedoch zu unterstreichen, wie dies im Folgenden dargelegt wird, dass das erfindungsgemässe Verfahren erlaubt, seine hauptsächlichen Vorteile in der Verteilung von auf Klimaschwankungen besonders empfindlichen Speisen auszunützen, die insbesondere zu grosse Luftfeuchtigkeit schlecht ertragen, wie Pizzas.

Die zu verteilenden Speisen, in Form von Pizzas oder Ähnlichem, müssen zuerst portioniert werden. Im Fall von Pizzas (vgl. 4) werden dafür normalerweise flache Kartonschachteln verwendet, in welchen die Pizzas dem Empfänger abgeliefert werden.

Wie im Folgenden dargelegt wird, erlaubt das erfindungsgemässe Verfahren, gemäss einer bevorzugten Ausführungsform, einen weiteren Rationalisierungsschritt zu realisieren, der sowohl ökonomisch wie ökologisch sehr vorteilhaft ist. Im Fall von heiss zubereiteten und während des Transportes warmzuhaltenden Speisen gelangen hingegen vorzugsweise Behälter aus Metall oder Kunststoffen in Form von Schalen mit Deckeln zur Verwendung.

Der nächste Verfahrensschritt besteht darin, dass eine oder mehrere Portionen der Speisen (im Fall von Pizzas 4 praktisch immer eine Mehrzahl von Portionen) in einem transportablen wiederverwendbaren Behälter 5 mit Öffnungen (vgl. die Ausnehmungen in den Wänden und im Boden) für die Luftzirkulation untergebracht werden. Solche Behälter 5 sind vorzugsweise aus Leichtmetall (Aluminium) gefertigt und können an den Seitenwänden mit horizontalen Führungen versehen sein, die auf Unterteilungs-Absätze im Innenraum des Behälters passen, wobei jedes Abteil beispielsweise zur Aufnahme eines Speisenbehälters ausgelegt ist. Auch solche Abstützungen werden in solcher Weise ausgelegt, dass sie die Luftzirkulation erlauben.

Diese wiederverwendbaren transportablen Behälter 5 sind für den Transport der Speisen zum Kunden vorgesehen, doch um die Zubereitung der Speisen im Wesentlichen unabhängig vom Verteilungsauftrag zu machen - also die Herstellung von Portionen zum Voraus, um die Leerlauf-Zeiten in der Küche besser ausnützen zu können - kann das erfindungsgemässe Verfahren vorsehen, dass eine Mehrzahl von transportablen wiederverwendbaren Behältern 5 bis zum Zeitpunkt der Verteilung in einem beheizten Ablage- oder Aufbewahrungskasten 6 versorgt werden, der eine Zirkulation mit Luft von kontrollierter Feuchtigkeit aufweist. In diesem feststehenden Schrank können die zubereiteten Speisen auch über längere Zeit aufbewahrt werden, da dank der vollständigen Klimatisierung und der Luftzirkulation auch durch die Behälter 5 hindurch, keine Veränderung, oder höchstens sehr beschränkte Veränderungen der Speisen auftreten, welche die Qualität nicht merklich beeinträchtigen.

Im nächsten Schritt des erfindungsgemässen Verfahrens der Verteilung folgt nun die Phase der eigentlichen Verteilung, bestehend aus dem Herausnehmen eines oder mehrerer Behälter 5 und deren Verlad in einen Transportofen 7, der auf einem Motorfahrzeug, mit 8 in der Fig. 1 schematisch mit strichpunktierten Linien als Lieferwagen angedeutet, montiert ist, der aber auch ein beheizter Ofen auf einem Motorrad sein könnte. Der Transportofen muss erfindungsgemäss mit einem eigentlichen Heizsystem sowie mit einer Regelung der Feuchtigkeit des Produkts versehen sein, das auf der Luftzirkulation im Ofen 7 basiert. Als ideal als Transportofen 7 geeignet, ohne indessen zwingend notwendig zu sein, hat sich jener Ofen erwiesen, der in der genannten EP-1293154 beschrieben ist, und der mit Hilfe der Abgase des Motorfahrzeugs beheizt und mit einem idealen Luftzirkulationssystem versehen ist. In der genannten Patentsschrift wird also ein im Rahmen der vorliegenden Erfindung zur Anwendung ideal geeigneter Ofen beschrieben, und der Inhalt genannten Patentschrift wird hiermit als integrierender Bestandteil der vorliegenden Patentanmeldung betrachtet.

Auf eine nähere Beschreibung des Ofens 7 kann hier deshalb verzichtet werden.

Als weiterer Schritt im erfindungsgemässen Verfahren folgt dann die Entnahme eines oder mehrerer Behälter 5 aus dem Transportofen 7 und die Ablieferung des heissen Produktes an den Endabnehmer (angedeutet Haus 9), nachdem es aus dem wiederverwendbaren Behälter 5 entnommen wurde, welcher im Fahrzeug 8 zum Produzenten zurückkommt. Auf diese Weise schliesst sich der ganze Zyklus der Zubereitung und des Transportes von heissen Speisen, dessen hauptsächliche Vorteile darin bestehen, dass der Produzent grösste Flexibilität in der Zubereitung erhält, da die heissen Speisen im Ablagekasten 6 über längere Zeit aufbewahrt werden können, sowie darin, dass die Qualität der verteilten Speisen, die von der Zubereitung bis zur Ablieferung während der ganzen Zeit unter optimalen Klimabedingungen gehalten werden, erhalten bleibt, dank der perfekten Klimatisierung im Ablagekasten 6 und dank der besonderen Eigenschaften des verwendeten Transportofens 7.

Das beschriebene Verfahren zum Verteilen erlaubt deshalb weiteres Optimieren der Arbeit in ihren besonderen Anwendungsformen, wenn weitere Verbesserungen angewendet werden, welche heute durch die Computerisierung der Prozessabläufe möglich werden. Im Folgenden seien hier lediglich zwei solche Verbesserungen näher beschrieben.

Gemäss einer bevorzugten ersten Ausführungsform des erfindungsgemässen Verfahrens ist vorgesehen, dass der Transport des Behälters oder der Behälter 5 zum oder zu den Endkunden auf einer optimierten Strassenstrecke erfolgt, um so die Fahrstrecke des Fahrzeugs zu verkürzen. Diese Vorgehensweise ist besonders geeignet, wenn heisse Speisen "auf Abruf' erfolgen soll, also sobald die Bestellungen aus einem bestimmten Gebiet in absolut zufälliger Folge eintreffen. Dies kommt beispielsweise häufig vor bei der Verteilung von Pizzas oder anderen heissen Speisen, die bei den "lokalen" Lieferanten (sogenannten Pizzakurieren) bestellt werden. In diesem Fall erlaubt die Informatik das Optimieren der Fahrroute für das Verteilen, wobei die kürzeste Fahrstrecke am schnellsten und kostengünstig befahren wird. Dabei handelt es sich um Möglichkeiten, welche heute verfügbar sind und in andern Logistik-Bereichen bereits in Anwendung stehen, und die hier dank der mit dem erfindungsgemässen Verteilverfahren angebotenen Systematik ein überaus interessantes Anwendungsfeld finden.

Diese Ausführungsform ist selbstverständlich weniger interessant, wenn es um die Lieferung heisser Mahlzeiten an feste Abonnenten geht, wie Senioren, Kurhäuser, Heime, usw., weil in solchen Fällen die Reihenfolge der Auslieferungen praktisch immer gleich bleibt und in der Praxis zum Voraus festgelegt ist. Es handelt sich also um eine Lösung, die sich speziell für Betriebe mit wechselnder, also gelegentlicher Kundschaft eignet, die jedoch in einem geografisch eng begrenzten Gebiet liefern - beispielsweise in einem Stadtviertel.

In solchen Fällen kann die Rationalisierung der Lieferrouten grossen finanziellen Vorteil bringen.

Gemäss einer anderen bevorzugten Ausführungsform des erfindungsgemässen Verfahrens, die an sich eine weitere Verbesserung der oben beschriebenen Ausführungsform darstellt, ist vorgesehen, dass das Unterbringen der Speisenportionen in einem Behälter 5 unter Berücksichtigung der Reihenfolge der Auslieferung der Portionen an die Endkunden erfolgt, wobei die Reihenfolge zum Voraus aufgrund der vorgesehenen Strassenroute festgelegt wird, wie sie mit Hilfe der oben beschriebenen Optimierung der Fahrroute eruiert wurde. Mit andern Worten ausgedrückt eröffnet die heutige Informatik die Möglichkeit, die Behälter 5 rationell in solche Weise zu befüllen, dass die Ablieferung and die Kunden weitestgehend erleichtert wird. Dabei ist offensichtlich, dass wenn die Behälter 5 gemäss einer mit der Auslieferungsreihenfolge verknüpften Systematik beladen werden, die Arbeit der mit der Lieferung der Speisen (insbesondere von Pizzas) betrauten Person stark erleichtert wird. Die Informatikmittel, in Form von Hardware und Software zum Erreichen der erwähnten Zwecke sind heute für jeden Fachmann auf dem Gebiet der Logistik-Organisation verfügbar und brauchen daher nicht näher erläutert zu werden.

Hingegen ergibt sich ein fundamentaler Vorteil im Fall des Transportes von Pizzas mit der Möglichkeit, gemäss einer weiteren bevorzugten Ausführungsform der vorliegenden Erfindung, die Pizzas ohne Verwendung von Kartonschachteln zu Liefern, wobei zu diesem Zweck undurchlässige Papierrondellen als Abstützung gebraucht werden. Heutzutage werden die Pizzas in allenfalls mit Luftlöchern versehenen Kartonschachteln beim Kunden abgeliefert, wegen der Mängel des Transportsystems, das nicht in der Lage ist, die erforderliche Konstanz der Klimabedingungen in der Umgebung sicherzustellen. Solche Kartonschachteln erlauben auch das Aufeinanderschichten, ohne dass die Pizzas während des Transportes Schaden nehmen. Dank der erfindungsgemässen Verwendung der transportablen wiederverwendbaren Behälter 5, die mit Abstützleisten für die einzelnen Pizzas versehen werden können, ist die Verwendung von Kartonschachteln nicht mehr unerlässlich, weil die Pizzas (wie auch andere flache Speisen wie Käsekuchen, usw.) in den Behältern 5 auf einfachen Unterstützungsrondellen optimal transportiert werden können, also quasi "offen".

Der Vorteil diese Lösung liegt auf der Hand: die Einsparung der Kartonschachteln, die per Stück zwischen 30 und 49 Cents kosten, kann für einen Verteilerbetrieb mittlerer Grösse beträchtliche Summen erreichen, wobei die Kosten für die Verbrennung und die ökologischen Schäden bei der Fabrikation der Kartonschachteln hinzukommen.

Das erfindungsgemässe Verfahren ist in einer bevorzugten Ausführungsform weiter dadurch gekennzeichnet, dass die Temperatur im beheizten Aufbewahrungskasten 6 zwischen 120°C und 160°C gehalten wird, und dass die Temperatur im Transportofen 7 (auch) zwischen 120°C und 160°C gehalten wird. Dies sind die Temperaturgrenzen, innerhalb welcher zusammen mit der Feuchtigkeitsregelung die Aufbewahrung und der Transport von heissen Speisen, insbesondere von Pizzas, in perfektem Zustand sichergestellt sind.

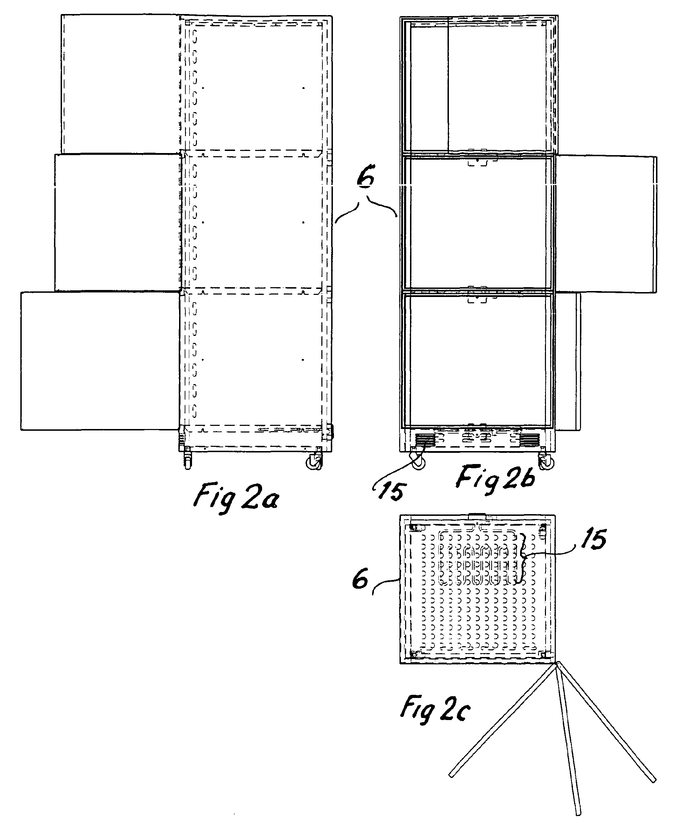

Die Vorrichtung zum Ausüben des Verfahrens gemäss dem Anspruch 1 umfasst die folgenden Elemente, die zum Teil schon in der Beschreibung des Verfahrens erläutert wurden:
- einen feststehenden Backofen 3 mit einer Abstellfläche 10 zur Unterteilung der Speisen in einzelne Portionen. In der Fig. 1 ist die Abstellfläche 10 als integrierender Bestandteil (Gesimse) des Backofens 3 dargestellt, doch könnte diese auch völlig vom Ofen getrennt sein und Teil eines (nicht gezeigten) Vorbereitungsraums (Office) für die Speisen sein, das mit allen erforderlichen Einrichtungen für diesen Zweck ausgerüstet ist,
- mindestens einen transportablen wiederverwendbaren Behälter 5 mit gelochten Wänden, durch welche die Luft zirkulieren kann. Der Behälter ist natürlich auch mit einer verschliessbaren Türe und vorzugsweise mit einem Traggriff versehen.
   In der Fig. 1 ist eine Lösung für eine verschliessbare Türe darstellt, die als abnehmbare Wand 11 ausgebildet ist, die am Behälter 5 durch Einführen eines horizontalen Stiftes 12 in ein Röhrchen 13 in solcher Weise befestigt wird, dass mit einer parallel zum Stift 12 angelegten Auslegerstange 14 ein Traggriff zum bequemen Transport des Behälters 5 gebildet wird. Diese spezielle Ausführungsform des Behälters 5 bringt den Vorteil, einfach und bequem zu sein, wobei insbesondere kein Schamier erforderlich ist, welches immer empfindlich auf Beschädigungen ist, und den Vorteil, dass sie den Transport des Behälters 5 in den Transportofen 7 ohne angebautes Türchen 11 erlaubt (wie aus der Fig. 1 ersichtlich, ist das Fahrzeug 8, mit zwei offenen Behältern 5 und einem abgenommenen Türchen 11 dargestellt), wodurch sich beste Bedingungen für die Zirkulation der Luft im Transportofen 7 ohne unnötige Hindernisse ergeben. Somit handelt es um eine bevorzugte Ausführungsform des Behälters 5, was jedoch andere Varianten nicht ausschliesst, wie jene erwähnte, bei der eine Türe mit einem Scharnier am Behälter angelenkt ist.
- Der Aufbewahrungsschrank 6 ist in den Figuren 2a bis 2c detaillierter dargestellt, welche die drei Grundansichten zeigen. Die erforderlichen Eigenschaften dieses Kastens sind einerseits die Ausrüstung mit einer eigenen Wärmequelle, die beispielsweise im untern Teil untergebracht ist, und die gemäss einer bevorzugten Ausführungsform aus einer elektrischen Widerstandsheizung 15 besteht, und anderseits die Ausrüstung mit einer Einrichtung zum Sicherstellen der Luftzirkulation durch den Schrank. Zu diesem Zweck sind die Unterteilungswände gelocht und sind mit Eintrittsöffnungen für die Zuluft und mit Austrittsöffnungen für die Abluft, welche den Schrank durchquert hat (nicht dargestellt) versehen. Ferner ist der Schrank 6 ausgerüstet mit Temperatur- und Feuchtigkeitsmessern, mittels welchen die Klimabedingungen im Schrank unabhängig von dessen Beladung mit Speisen konstant gehalten werden können.

Schliesslich umfasst die erfindungsgemässe Vorrichtung auch:
Einen Transportofen 7, der auf einem Motorfahrzeug 8 montiert ist, und der mindestens einen wiederverwendbaren transportablen Behälter 5 aufnehmen kann. Der Ofen 7 muss mit einer eigenen regelbaren Heizung versehen sein und eine mit einer Einrichtung zur Feuchtigkeitsregelung des Produktes ausgerüstet sein, die auf der Luftzirkulation im Ofen 7 basiert.

Zu unterstreichen ist, dass die vorliegende Erfindung nicht darauf ausgerichtet ist, die Neuheit jedes einzelnen Elementes, das Teil der beschriebenen Vorrichtung ist, zu beanspruchen. Die Verwendung von beheizten Ablageschränken, wie der beschriebene und mit 6 bezeichnete, die mit Heizung und Klimatisierung ausgerüstet sind, ist als solche aus der Praxis wohlbekannt, ebenso wie der Gebrauch von Transportöfen 7, die auf einem Motorfahrzeug 8 montiert sind. Für solche Öfen ist ein ideales Beispiel der in der EP-1293154 beschriebene, der in grosser Zahl in praktischem Gebrauch steht. Was die vorliegende Erfindung patentrechtlich zu schützen sucht, ist die neuartige systematische Verkettung der einzelnen Arbeitsschritte des Verfahrens bzw. der einzelnen Elemente der Vorrichtung, die absolut kontrollierbare und wiederholbare Bedingungen für die Verteilung heisser Speisen zu realisieren ermöglicht.

Gemäss einer bevorzugten Ausführungsform der vorliegenden Erfindung ist sodann vorgesehen, dass der Transportofen auf einem Automobil oder auf einem Lieferwagen, wie dem in der Fig. 1 mit 8 bezeichneten, montiert sei. Diese Lösung, die schon mit dem Stand der Technik der EP-1293154 bekannt ist, jedoch im Kontext mit der vorliegenden Erfindung neuartig ist, erlaubt das Verteilen einer grossen Zahl von Portionen von Speisen mit einer Fahrt, und ist daher vorteilhaft geeignet, wenn die abzufahrenden Routen eher lang und die Klimabedingungen eher ungünstig sind.

Gemäss einer anderen Ausführungsform der vorliegenden Erfindung, die an sich bereits aus der oben erwähnten EP bekannt ist, die aber im Rahmen des Verfahrens, welches das Objekt der vorliegenden Erfindung ist, neuartig ist, wird der Transportofen 7 auf einem Motorrad montiert. Hier handelt es sich um eine Lösung, die sich für geografische enger begrenzte Lieferrayons eignet, und die sich im praktischen Gebrauch für den Transport eines jeweils einzigen wiederverwendbaren Behälters 5 eignet, sich jedoch für ungünstige Klimabedingungen weniger eignet, aber dennoch den grossen Vorteil günstiger Kosten aufweist und daher in Stadtgebieten häufig zur Anwendung kommt.

Wie übrigens bereits erwähnt, ist eine bevorzugte Ausführungsform der vorliegenden Erfindung jene, die als Transportofen 7 einen gemäss den Angaben der EP-1293154 ausgelegten Ofen vorsieht, in welchem das Heizsystem einen Wärmetauscher vorsieht, durch den die Abgase des Motorfahrzeugs 8 strömen, die ihre Wärme mittels Wärmeleitung an die im Ofen 7 befindliche Luft abgeben. Die Vorteile dieser Lösung sind weiter oben bereits beschrieben. Die vorliegende Erfindung repräsentiert generell die Systematisierung der effizienteren Verwendung von Transportöfen dieses Typs.

### Liste der in den Figuren verwendeten Bezugsziffern

- 1: Telefon
- 2: Formular
- 3: Backofen
- 4: Pizza
- 5: transportabler wiederverwendbarer Behälter
- 6: Ablage- und Aufbewahrungsschrank
- 7: Transportofen
- 8: Motorfahrzeug
- 9: Haus
- 10: Verarbeitungsfläche
- 11: abnehmbare Wand
- 12: horizontaler Stift
- 13: Röhrchen
- 14: Ausleger-Stange
- 15: elektrische Widerstand

## Patentansprüche

1. Verfahren zum Verteilen heisser Speisen, insbesondere von Pizzas, **gekennzeichnet durch** die folgenden Verfahrensschritte:
- Vorbereiten und Zubereiten der Speisen, im Wesentlichen bis zur Fertigstellung,
- Unterteilen der Speisen in Einzelportionen,
- Unterbringen einer oder mehrerer Speisen-Portionen in einem transportablen wiederverwendbaren Behälter (5), der mit Öffnungen für die Luftzirkulation versehen ist,
- Unterbringen, bis zum Zeitpunkt der Verteilung, einer Mehrzahl von Behältern (5) in einem beheizten Aufbewahrungsschrank (6) der mit Einrichtungen zur Luftzirkulation und Feuchtigkeitsregelung ausgerüstet ist,
- Zum Zeitpunkt der Verteilung Entnahme eines oder mehrerer Behälter (5), die in einem Transportofen (7) untergebracht werden, der auf einem Motorfahrzeug (8) montiert ist und mit einem eigenen Heizsystem sowie mit einer auf der Luftzirkulation im Ofen (7) basierenden Feuchtigkeitsregelung versehen ist,
- Entnahme eines oder mehrerer Behälter (5) aus dem Transportofen (7) für die Auslieferung des heissen Produkts an den Endkunden nach der Entnahme aus dem wiederverwendbaren Behälter (5).

2. Verfahren gemäss dem Anspruch 1,
**dadurch gekennzeichnet, dass**
der Transport des Behälters oder der Behälter (5) zum oder zu den Endkunden längs einer optimierten Fahrroute erfolgt, um die Fahrstrecke des Fahrzeugs zu reduzieren.

3. Verfahren gemäss den Ansprüchen 1 und 2,
**dadurch gekennzeichnet, dass**
das Unterbringen der Speisen-Portionen in einem Behälter (5) unter Berücksichtigung der Verteilungs-Reihenfolge der Portionen längs der vorgesehenen Fahrroute an den oder die Endkunden erfolgt.

4. Verfahren gemäss dem Anspruch 1, nach welchem die transportierten heissen Speisen Pizzas sind,
**dadurch gekennzeichnet, dass**
das Unterteilen der Speise in einzelne Portionen ohne Verwendung von Kartonschachteln für die einzelnen Pizzas erfolgt, sondern dass bloss Unterlagerondellen aus undurchlässigem Papier verwendet werden.

5. Verfahren gemäss dem Anspruch 1,
**dadurch gekennzeichnet, dass**
die Temperatur im beheizten Aufbewahrungskasten (6) zwischen 120°C und 160°C liegt, und dass die Temperatur im Transportofen (7) zwischen 120°C und 160°C liegt.

6. Vorrichtung zum Ausüben des Verfahrens zum Verteilen heisser Speisen, insbesondere von Pizzas, gemäss dem Anspruch 1,
welche die folgenden Elemente umfasst:
- Einen feststehenden Backofen (3) mit einer Zubereitungs-Ablagefläche (10) für die Unterteilung der Speise in einzelne Portionen,
- Mindestens einen transportablen wiederverwendbaren Behälter (5), der mit gelochten Wänden versehen ist, durch welche die Luft zirkulieren kann,
- Einen beheizten Aufbewahrungsschrank (6), der eine Mehrzahl von wiederverwendbaren Behältern (5) aufnehmen kann, und der mit eigenen Wärmequellen und mit einer Einrichtung zum Sicherstellen der Luftzirkulation durch den ganzen Kasten ausgerüstet ist, und der mit Abstützungen für die Behälter versehen ist, sowie Einlassöffnungen für die Zuluft und Auslassöffnungen für die Abluft nach der Zirkulation durch den Kasten, sowie mit Messgeräten für die Temperatur und die Feuchtigkeit versehen ist,
- Einen auf einem Motorfahrzeug (8) montierten Transportofen (7), der mindestens einen transportablen wiederverwendbaren Behälter (5) aufnehmen kann und mit einem eigenen steuerbaren Heizsystem sowie einem auf der Luftzirkulation im Ofen (7) basierenden Gerät zur Regelung der Feuchtigkeit des Produkts ausgerüstet ist.

7. Vorrichtung gemäss dem Anspruch 6,
**dadurch gekennzeichnet, dass**
der Transportofen (7) auf einem Automobil oder einem Lieferwagen montiert ist.

8. Vorrichtung gemäss dem Anspruch 6,
**dadurch gekennzeichnet, dass**
der Transportofen (7) auf einem Motorrad montiert ist.

9. Vorrichtung gemäss dem Anspruch 7 oder 8,
**dadurch gekennzeichnet, dass**
das Heizsystem des Transportofens (7) einen Wärmetauscher umfasst, durch den die Abgase des Motorfahrzeugs (8) strömen, die ihre Wärme durch Wärmeleitung an die Luft im Ofen (7) übertragen und diese heizen.

10. Vorrichtung gemäss dem Anspruch 6,
**dadurch gekennzeichnet, dass**
der Aufbewahrungsschrank (6) mittels einer elektrischen Widerstandsheizung (15) beheizt ist.

11. Vorrichtung gemäss dem Anspruch 6,
**dadurch gekennzeichnet, dass**
mindestens ein transportabler wiederverwendbarer Behälter (5) mit einer abnehmbaren Wand (11) versehen ist, die am Behälter (5) in solcher Weise angebracht werden kann, dass sie nach dem Anbringen einen Traggriff für den Behälter bildet.
